# FASCICULE DE BREVET EUROPEEN

(11) **EP 2 858 897 B1**
(45) Date de publication et mention de la délivrance du brevet: **27.04.2016**
(21) Numéro de dépôt: 13729007.8
(22) Date de dépôt: 07.06.2013
(51) Int. Cl.: B64C 13/04, G05G 9/047

(54) **MINIMANCHE DE PILOTAGE D'UN AERONEF**
JOYSTICK ZUM STEUERN EINES FLUGZEUGS
JOYSTICK FOR CONTROLLING AN AIRCRAFT

(30) Priorité: 07.06.2012 FR 1255322
(43) Date de publication de la demande: 15.04.2015
(73) Titulaire: SAGEM DEFENSE SECURITE, 92100 Boulogne-Billancourt (FR)
(72) Inventeur: BUOY, Florence, F-92100 Boulogne-Billancourt (FR); MERLET, Etienne, F-92100 Boulogne-Billancourt (FR); GORECKI, Herve, F-92100 Boulogne-Billancourt (FR); GOMOLKO, Oleg, F-92100 Boulogne-Billancourt (FR); FONTAINE, Sébastien, F-92100 Boulogne-Billancourt (FR); VANDENBAVIERE, Yann, F-92100 Boulogne-Billancourt (FR); GOUARD, Christian, F-92100 Boulogne-Billancourt (FR); POINTEL, Guillaume, F-92100 Boulogne-Billancourt (FR)
(74) Mandataire: Regimbeau
(86) Numéro de dépôt international: PCT/EP2013/061792
(87) Numéro de publication internationale: WO 2013/182679

(56) Documents cités:
- US-B2- 7 320 263

## Description

### DOMAINE DE L'INVENTION

L'invention concerne un minimanche de pilotage d'un aéronef.

### ETAT DE LA TECHNIQUE

Les aéronefs sont traditionnellement équipés de manche de pilotage permettant au pilote d'actionner les ailerons et la gouverne de profondeur afin de commander l'attitude de l'aéronef sur les axes de tangage et de roulis. Le manche de pilotage est positionné entre les jambes du pilote, qui se sert de la force de ses bras pour actionner le manche.

Dans certains avions équipés de commandes de vol électriques, le manche de pilotage a été remplacé par un dispositif de pilotage appelé « minimanche ». Plus compact qu'un manche de pilotage classique, le minimanche est généralement intégré dans un accoudoir du siège du pilote et comprend une manette que le pilote actionne par le seul mouvement de son poignet. L'installation de minimanches a permis de dégager l'espace situé entre le pilote et le tableau de bord afin d'y installer d'autres équipements. Une telle manche de pilotage est connue de US 7320263.

Par ailleurs, le minimanche inclut généralement un ensemble de ressorts permettant d'exercer un effort de rappel sur chacun des axes de rotation de la manette (axe de roulis et axe de tangage) et de ramener la manette en une position neutre lorsque le pilote n'exerce aucun effort sur la manette.

Toutefois, les structures mécaniques de minimanche existantes ne permettent généralement pas d'obtenir un découplage des efforts de rappel entre les deux axes de rotation de la manette. Autrement dit, l'effort de rappel exercé sur un axe de la manette dépend de la position angulaire de la manette selon l'autre axe.

De plus, ces structures ne permettent pas non plus de générer des efforts de rappel linéaires (c'est-à-dire dont l'intensité est proportionnelle à la position angulaire de la manette selon l'axe de rotation considéré).

### RESUME DE L'INVENTION

Un but de l'invention est de proposer une structure de minimanche permettant un découplage entre les efforts de rappel exercés sur chacun des axes.

Ce problème est résolu dans le cadre de la présente invention grâce à un minimanche de pilotage d'un aéronef, comprenant un bâti, une manette montée mobile en rotation par rapport au bâti, et un ensemble mécanique de liaison de la manette au bâti, l'ensemble mécanique de liaison comprenant :
- une première pièce de liaison montée mobile par rapport au bâti autour d'un premier axe de rotation,
- une deuxième pièce de liaison montée mobile par rapport au bâti autour d'un deuxième axe de rotation, le deuxième axe de rotation formant un angle non-nul avec le premier axe de rotation,
- une troisième pièce intermédiaire montée mobile en rotation par rapport à la première pièce de liaison autour d'un troisième axe de rotation,
- une quatrième pièce intermédiaire montée mobile en rotation par rapport à la deuxième pièce de liaison autour d'un quatrième axe de rotation, le quatrième axe de rotation formant un angle non-nul avec le troisième axe de rotation,
dans lequel les pièces de liaison ou les pièces intermédiaires sont mobiles en rotation l'une par rapport à l'autre autour d'un cinquième axe de rotation formant un angle non-nul respectivement avec le premier axe de rotation et le deuxième axe de rotation ou avec le troisième axe de rotation et le quatrième axe de rotation, de manière à autoriser respectivement une variation de l'angle formé entre le premier axe de rotation et le deuxième axe de rotation ou de l'angle formé entre le troisième axe de rotation et le quatrième axe de rotation.

Grâce à la structure de minimanche proposée, il est possible d'exercer des efforts de rappel sur la première pièce de liaison et sur la deuxième pièce de liaison de manière totalement indépendante.

Par ailleurs, l'existence d'un cinquième axe de rotation autorise un désalignement entre le premier axe de rotation et le quatrième axe de rotation et/ou entre le deuxième axe de rotation et le troisième axe de rotation. Ce degré de liberté supplémentaire permet un déplacement de la manette en rotation simultanément selon le premier axe de rotation et selon le deuxième axe de rotation, malgré un désalignement se produisant entre les axes du référentiel fixe matérialisé par le bâti (premier et deuxième axes de rotation) et les axes des référentiels pivotants matérialisés par les pièces de liaison (troisième et quatrième axes).

Le minimanche selon l'invention peut en outre présenter les caractéristiques suivantes :
- l'ensemble mécanique de liaison comprend un organe de liaison comprenant une bague externe et une bague interne montées rotatives l'une par rapport à l'autre autour du cinquième axe de rotation, chacune des pièces de liaison ou respectivement des pièces intermédiaires étant reliée à une bague respective de l'organe de liaison, la manette étant solidaire de la troisième pièce intermédiaire et/ou de la quatrième pièce intermédiaire,
- l'une des bagues de l'organe de liaison est fixe par rapport à la première pièce de liaison et l'autre bague est fixe par rapport à la deuxième pièce de liaison,
- l'une des bagues de l'organe de liaison est fixe par rapport au bâti, de manière à autoriser une rotation seulement de la première pièce de liaison ou seulement de la deuxième pièce de liaison par rapport au bâti autour du cinquième axe de rotation,
- l'organe de liaison comprend au moins un galet monté rotatif autour d'un axe de rotation fixe par rapport au bâti, le galet étant interposé entre la bague interne et la bague externe de sorte qu'une rotation de l'une des bagues par rapport au bâti entraine concomitamment une rotation en sens opposé de l'autre bague par rapport au bâti,
- l'une des bagues de l'organe de liaison est fixe par rapport à la troisième pièce intermédiaire et l'autre bague est fixe par rapport à la quatrième pièce intermédiaire,
- l'une des bagues de l'organe de liaison est fixe par rapport à la manette, de manière à autoriser une rotation de la manette seulement par rapport à la troisième pièce intermédiaire ou seulement par rapport à la quatrième pièce intermédiaire autour du cinquième axe de rotation,
- l'organe de liaison comprend au moins un galet monté rotatif autour d'un axe de rotation fixe par rapport à la manette, le galet étant interposé entre la bague interne et la bague externe de sorte qu'une rotation de l'une des bagues par rapport à la manette entraine concomitamment une rotation en sens opposé de l'autre bague par rapport à la manette,
- l'ensemble mécanique de liaison comprend un organe de liaison comprenant une partie fixe et une partie montée mobile par rapport à la partie fixe, l'organe de liaison comprenant au moins deux lames flexibles, chaque lame flexible reliant les parties entre elles et étant déformable élastiquement pour autoriser une rotation de la partie mobile par rapport à la partie fixe, les lames flexibles étant aptes à générer un couple de rappel tendant à s'opposer à la rotation des parties entre elles,
- la troisième pièce intermédiaire ou la quatrième pièce intermédiaire est fixée à une partie de l'organe de liaison et la manette est fixée à l'autre partie de l'organe de liaison,
- la manette est reliée au bâti par une liaison rotule autorisant une rotation de la manette selon les trois axes de rotation par rapport au bâti,
- la manette est reliée au bâti par une liaison cardan autorisant seulement une rotation de la manette selon le premier axe et une rotation de la manette selon le deuxième axe par rapport au bâti,
- la manette est apte à venir en appui simple sur la troisième pièce intermédiaire et sur la quatrième pièce intermédiaire pour solliciter les pièces intermédiaires en rotation respectivement selon les troisième et quatrième axes, de manière à autoriser une rotation relative des pièces intermédiaires par rapport à la manette selon le cinquième axe de rotation,
- l'une des pièces intermédiaires comprend une butée agencée de sorte que la manette est apte à venir en appui sur la butée pour solliciter la pièce intermédiaire et provoquer la rotation de la pièce intermédiaire dans un seul sens de sollicitation,
- la manette est apte à venir en appui sur la butée selon une ligne de contact rectiligne, parallèle au cinquième axe de rotation,
- la manette est apte à venir en appui sur la butée selon une surface de contact cylindrique, ayant un axe de révolution parallèle au cinquième axe de rotation,
- le minimanche comprend un organe de rappel apte à solliciter l'une des pièces intermédiaires de l'organe de liaison pour s'opposer à la rotation de la pièce intermédiaire,
- l'organe de rappel comprend un ressort de traction reliant la première pièce de liaison ou la deuxième pièce de liaison à la pièce intermédiaire qui est entrainée en rotation sous l'action de la manette,
- l'organe de rappel comprend un ruban reliant le ressort de traction et la pièce intermédiaire, le ruban étant apte à s'enrouler autour d'un élément cylindrique et solidaire de la pièce intermédiaire.

### PRESENTATION DES DESSINS

D'autres caractéristiques et avantages ressortiront encore de la description qui suit, laquelle est purement illustrative et non limitative, et doit être lue en regard des figures annexées, parmi lesquelles :
- les figures 1A et 1B représentent de manière schématique un minimanche selon un premier mode de réalisation de l'invention avec des berceaux,
- les figures 2A et 2B représentent de manière schématique l'action d'un organe de rappel sur une bague externe d'un berceau du minimanche,
- la figure 3 représente de manière schématique l'agencement d'un organe de rappel sur une bague interne d'un berceau du minimanche,
- les figures 4A et 4B représentent de manière schématique l'agencement de deux organes de rappel sur les bagues internes de deux berceaux,
- les figures 5A à 5D représentent de manière schématique un organe de rappel présentant une double raideur,
- les figures 6A à 6C représentent de manière schématique un exemple de système à cardan pouvant être utilisé pour monter la manette sur le boîtier du minimanche,
- les figures 7A à 7C représentent de manière schématique un minimanche selon un deuxième mode de réalisation de l'invention avec des roulements,
- les figures 8A à 8C représentent de manière schématique une fixation de l'organe de rappel à une bague d'un roulement,
- les figures 9A et 9B représentent de manière schématique deux exemples de contact entre la manette et les berceaux pour une réalisation du minimanche des figures 1A et 1B,
- la figure 10 représente de manière schématique une première variante du minimanche des figures 7A à 7C,
- la figure 11 représente de manière schématique une deuxième variante du minimanche des figures 7A à 7C,
- la figure 12 représente de manière schématique une troisième variante du minimanche des figures 7A à 7C,
- la figure 13 représente de manière schématique une quatrième variante du minimanche des figures 7A à 7C,
- la figure 14 représente de manière schématique une cinquième variante du minimanche des figures 7A à 7C,
- la figure 15 représente de manière schématique un organe de liaison pouvant être utilisé dans les variantes des figures 12, 13 et 14 à la place du cinquième roulement.

### DESCRIPTION DETAILLEE

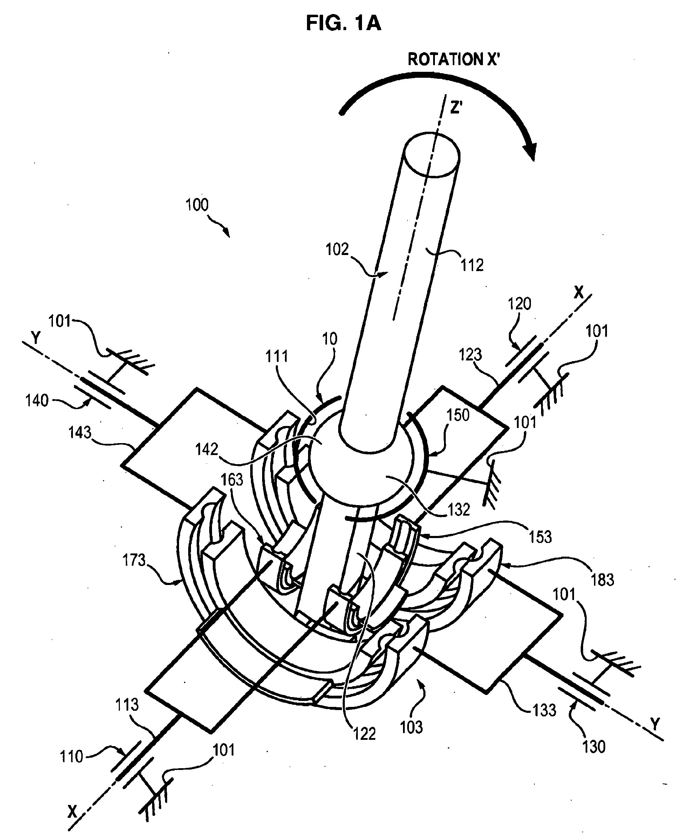

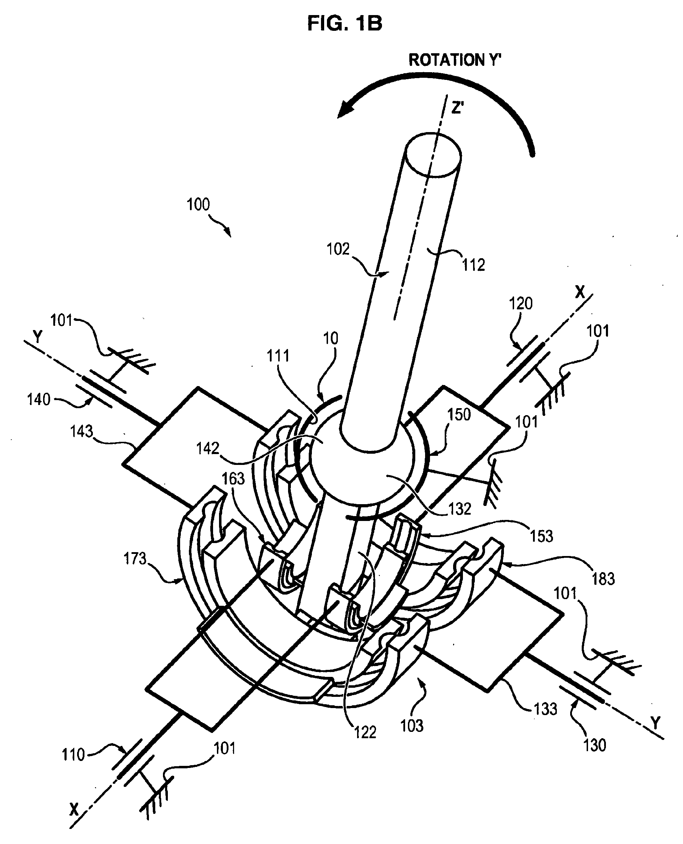

Les figures 1A et 1B représentent de manière schématique un minimanche 100 selon un premier mode de réalisation de l'invention.

Le minimanche 100 comprend un bâti 101 destiné par exemple à être intégré dans un accoudoir d'un siège, une manette 102 montée mobile en rotation par rapport au bâti, et un ensemble mécanique 103 de liaison de la manette au bâti permettant de générer un retour d'effort sur la manette selon deux axes de rotation.

La manette 102 présente une forme générale allongée selon une direction longitudinale (axe Z'). Plus précisément, la manette 102 comprend une partie supérieure allongée 112 destinée à être saisie par la main du pilote, une partie inférieure allongée 122 apte à coopérer avec l'ensemble mécanique de liaison 103, et une partie intermédiaire 132 présentant une surface externe sphérique 142.

Le bâti 101 comprend une partie de support présentant une surface interne sphérique 111 recevant la partie intermédiaire 132 de la manette 102. La manette 102 est ainsi reliée au bâti 101 par une liaison rotule 150 constituée par la surface externe sphérique 142 de la partie intermédiaire 132 de la manette 102 et la surface interne sphérique 111 complémentaire de la partie de support du bâti 101.

L'ensemble mécanique de liaison 103 comprend deux paires de pièces de liaison, incluant une première paire de pièces de liaison 113, 123 et une deuxième paire de pièce de liaison 133,143.

Chaque pièce de liaison 113, 123 de la première paire est montée mobile en rotation par rapport au bâti 101 autour d'un premier axe de rotation (axe X) par le biais de premières liaisons pivot 110 et 120.

De même, chaque pièce de liaison 133, 143 de la deuxième paire est montée mobile par rapport au bâti 101 autour d'un deuxième axe de rotation (axe Y) par le biais de deuxièmes liaisons pivot 130 et 140.

Lorsque le minimanche 100 est en position de neutre (c'est-à-dire que le pilote n'exerce aucune sollicitation sur la manette 102), le deuxième axe de rotation (axe Y) est perpendiculaire au premier axe de rotation (axe X). De plus, le premier axe de rotation et le deuxième axe de rotation se coupent en un point d'intersection O qui est également le centre de rotation de la manette 102 par rapport au bâti 101, centre de la liaison rotule 150 (représenté déporté sur la figure selon l'axe Z' dans le seul but de dégager la vue des pièces sur le dessin).

L'ensemble mécanique de liaison 103 comprend également quatre ensembles de berceaux 153, 163, 173 et 183, incluant deux premiers ensembles de berceaux 153, 163 et deux deuxièmes ensembles de berceaux 173, 183. Chaque ensemble de berceaux comprend un berceau bâti et un berceau manette.

Dans chaque premier ensemble de berceaux 153, 163, le berceau bâti 154, 164 est monté solidaire des premières pièces de liaison 113, 123, de sorte qu'une rotation des premières pièces de liaison 113, 123 autour du premier axe de rotation X entraine également une rotation des premiers ensembles de berceaux 153, 163. De plus, le berceau manette 155, 165 est monté mobile en rotation par rapport au berceau bâti 154, 164 selon un troisième axe de rotation (axe Y') perpendiculaire au premier axe de rotation (axe X).

De même, dans chaque deuxième ensemble de berceaux 173, 183, le berceau bâti 174, 184 est monté solidaire des deuxièmes pièces de liaison 133, 143, de sorte qu'une rotation des deuxièmes pièces de liaison 133, 143 autour du deuxième axe de rotation Y entraine également une rotation des deuxièmes ensembles de berceaux 173, 183. De plus, le berceau manette 175, 185 est monté mobile en rotation par rapport au berceau externe 174, 184 selon un quatrième axe de rotation (axe X') perpendiculaire au deuxième axe de rotation (axe Y).

Dans ce premier mode de réalisation, les berceaux manette 155, 165, 175 - et 185 constituent des pièces intermédiaires de l'ensemble mécanique de liaison 103 pour lier les pièces de liaison à la manette 102.

Plus précisément, dans chaque premier ensemble de berceaux 153, 163, le berceau manette 155, 165 est apte à être entrainé en rotation par rapport au berceau bâti 154, 164 (et par conséquent par rapport à la première pièce de liaison) sous l'action de la manette 102 autour du troisième axe de rotation. Comme cela est visible sur la figure 1B, une rotation de la manette 102 autour du troisième axe (axe Y') entraine concomitamment une rotation des deuxièmes ensembles de berceaux 173, 183 et des deuxièmes pièces de liaison 133, 143 autour du deuxième axe de rotation par rapport au bâti (axe Y).

De même, dans chaque deuxième ensemble de berceaux 173, 183, le berceau manette 175, 185 est apte à être entrainé en rotation par rapport au berceau bâti 174, 184 (et par conséquent par rapport à la deuxième pièce de liaison) sous l'action de la manette 102 autour du quatrième axe de rotation. Comme cela est visible sur la figure 1A, une rotation de la manette 102 autour du quatrième axe (axe X') entraine concomitamment une rotation des premiers ensembles de berceaux 153, 163 et des premières pièces de liaison 113, 123 autour du premier axe de rotation par rapport au bâti 101 (axe X).

C'est pourquoi, les ensembles de berceaux 153, 163, 173, 183 constituent pour la manette 102 des référentiels pivotants par rapport au référentiel fixe défini par le bâti 101.

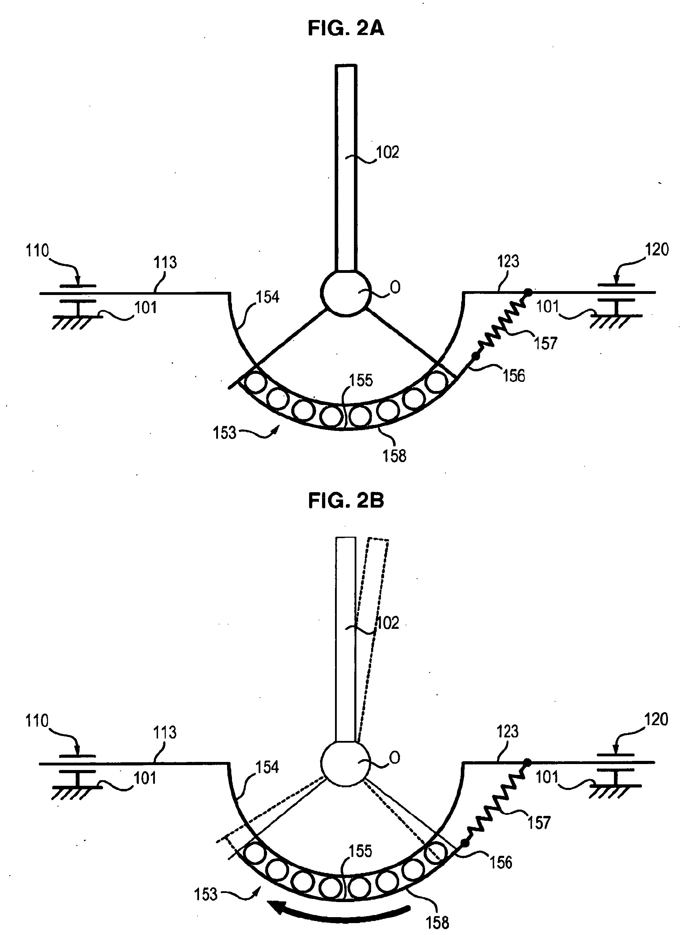

Comme cela est illustré sur les figures 2A et 2B, le minimanche 100 comprend une pièce de liaison 113, un ensemble de berceaux incluant un berceau bâti 154 fixe par rapport à la pièce de liaison 113 et un berceau manette 155 mobile par rapport au berceau bâti fixe 154 (et donc par rapport à la pièce de liaison), et un organe de rappel 156 s'étendant entre une pièce de liaison 123 et le berceau manette mobile 155. L'organe de rappel 156 est apte à exercer un couple de rappel tendant à s'opposer à une rotation du berceau manette 155 par rapport au berceau bâti 154, c'est-à-dire à s'opposer à une rotation de la manette 102 par rapport au bâti 101. L'organe de rappel 156 comprend un ressort linéique hélicoïdal 157 et un ruban 158 venant s'enrouler autour d'une portion de surface cylindrique du berceau manette 155.

Le ruban 158 présente une première extrémité fixée à la portion de surface cylindrique et une deuxième extrémité fixée à une deuxième extrémité du ressort. Le ressort 157 présente une première extrémité fixée à la pièce de liaison et une deuxième extrémité fixée à la deuxième extrémité du ruban. Comme cela est illustré sur la figure 2B, une rotation du berceau manette 155 par rapport au berceau bâti 154 provoque un enroulement du ruban 158 et un allongement du ressort 157, l'allongement du ressort 157 étant proportionnel à l'angle de rotation θ du berceau manette 155 par rapport au berceau bâti 154 autour de l'axe Y'. Ce montage permet d'obtenir un retour d'effort linéaire sur la manette 102.

Sur les figures 2A et 2B, le berceau manette 155 est le berceau externe et le berceau bâti 154 est le berceau interne de l'ensemble de berceaux 153. C'est pourquoi, l'organe de rappel 156 exerce un effort de rappel sur le berceau manette externe 155.

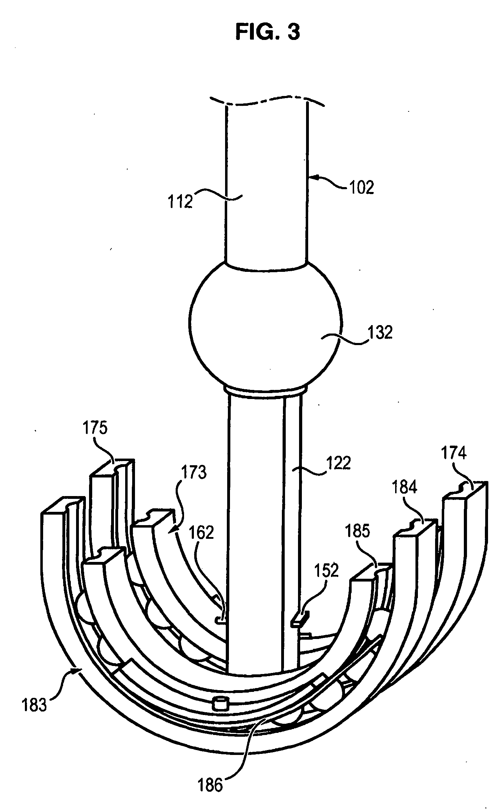

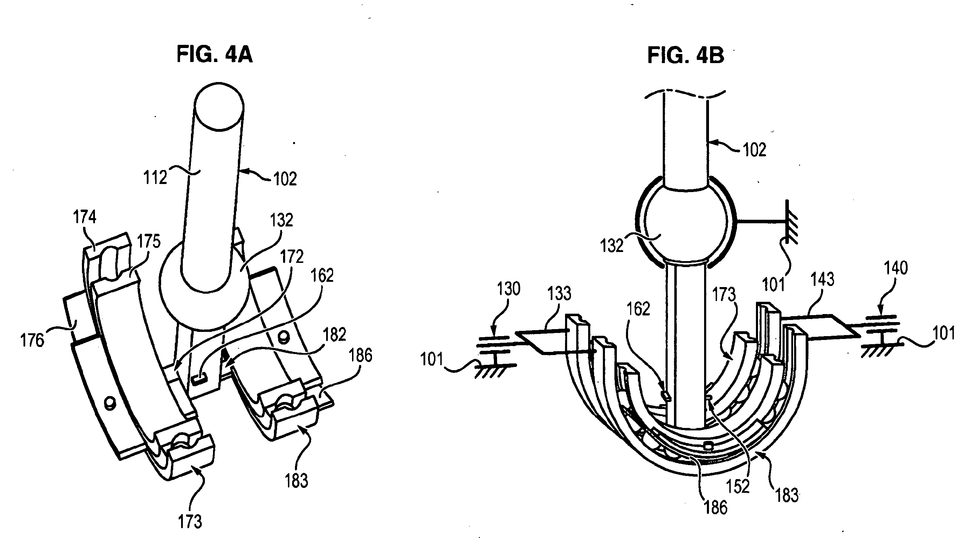

Les figures 3, 4A et 4B représentent un exemple de montage dans lequel, dans chaque ensemble de berceaux 173, 183, le berceau manette 175, 185 est le berceau interne et le berceau bâti 174, 184 est le berceau externe. L'organe de rappel 176, 186 exerce un effort de rappel sur le berceau manette interne 175, 185.

Sur ces figures, seuls les deuxièmes pièces de liaison 133, 143 et les deuxièmes ensembles de berceaux 173, 183 ont été représentés. Toutefois, le même montage est réalisé pour les premières pièces de liaison 113, 123 et les premiers ensembles de berceaux 153, 163.

Comme cela apparaît sur les figures 4A et 4B, la partie inférieure 122 de la manette 102 comprend quatre protubérances 152, 162, 172 et 182. De plus, chaque berceau manette 155, 165, 175 et 185 présente une butée. Chaque protubérance 152, 162, 172 et 182 est apte à venir en appui contre une butée correspondante d'un berceau manette 155, 165, 175 et 185 pour entraîner en rotation le berceau manette.

Les protubérances et les butées sont agencées de sorte qu'une rotation de la manette 102 selon le quatrième axe de rotation (axe X') dans un premier sens entraine une rotation du berceau manette 175 par rapport au berceau bâti 174, sans entraîner le berceau manette 185 en rotation. A l'inverse, une rotation de la manette 102 selon le quatrième axe de rotation (axe X') dans un deuxième sens, opposé au premier sens, entraine une rotation du berceau manette 185 par rapport au berceau bâti 184, sans entrainer le berceau manette 175 en rotation.

Comme chaque berceau manette 155, 165, 175, 185 est muni de son propre organe de rappel, il est possible de prévoir des organes de rappel 156, 166, 176, 186 présentant des caractéristiques différentes, afin d'obtenir un retour d'effort différent selon le sens de sollicitation de la manette autour de l'axe X' et de l'axe Y'.

Par ailleurs, le montage proposé permet de faire travailler les organes de rappel 156, 166, 176, 186 uniquement en traction, de sorte qu'aucun dispositif de guidage des organes de rappel n'est nécessaire et que tout risque de flambement des éléments constituant ces organes de rappel, que ce soit le ruban 158 ou le ressort linéique hélicoïdal 157, est éliminé.

De plus, ce montage permet de concevoir un minimanche 100 dans lequel les organes de rappel 156, 166, 176, 186 sont montés en étant précontraints en traction, c'est-à-dire que chaque organe de rappel 156, 166, 176, 186 exerce un effort de rappel non-nul sur la manette 102 lorsque la manette 102 est en position neutre. Cela permet de créer un seuil d'effort devant être vaincu lors de l'initialisation du déplacement de la manette.

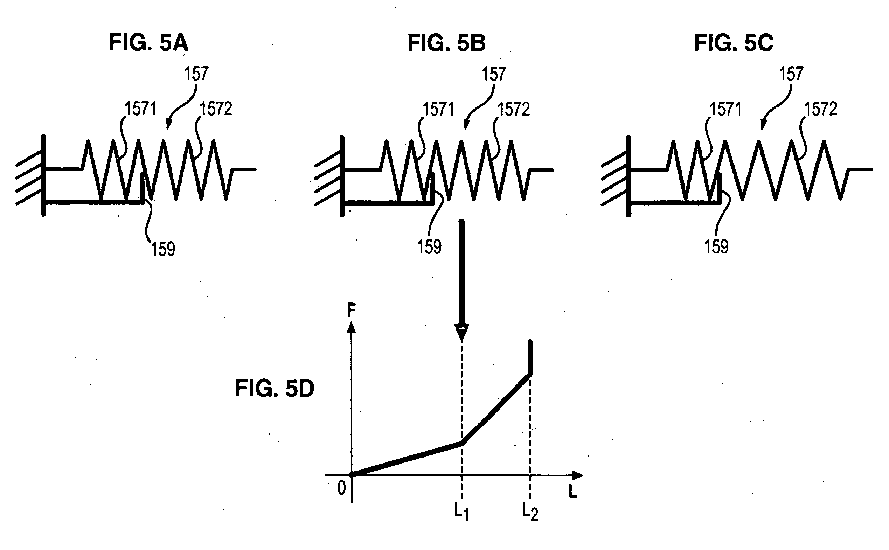

Les figures 5A à 5C représentent de manière schématique un exemple d'organe de rappel 156 permettant de générer une double raideur dans un sens de rotation.

A cet effet, l'organe de rappel 156 comprend un ressort 157 et une butée 159. Le ressort 157 présente une première portion de ressort 1571 et une deuxième portion de ressort 1572 montée en série avec la première portion de ressort 1572, la butée 159 étant intercalée entre une spire de la première portion de ressort 1571 et une spire de la deuxième portion de ressort 1572.

Sur la figure 5A, le ressort 157 est initialement en position neutre, c'est-à-dire que la manette 102 n'est soumise à aucune sollicitation de la part du pilote.

Les figures 5B et 5C représentent le ressort 157 lorsque la manette 102 est sollicitée par le pilote autour de l'axe de rotation Y'.

Sur la figure 5B, au cours d'une première phase, le ressort 157 a été étiré d'une première longueur Li. Les deux portions de ressort 1571 et 1572 se sont allongées jusqu'à ce qu'une spire de la première portion de ressort 1571 vienne en appui contre la butée 159. Une fois la spire de la première portion de ressort 1571 en appui contre la butée 159, la première portion de ressort 1571 ne peut plus être allongée.

Sur la figure 5C, au cours d'une deuxième phase, le ressort a été étiré d'une deuxième longueur L₂, supérieure à la première longueur L₁, mais seule la deuxième portion de ressort 1572 s'est allongée, la première portion de ressort 1571 étant neutralisée par la butée 159.

La figure 5D illustre l'intensité de l'effort F de rappel généré par l'organe de rappel 156 en fonction de l'allongement L du ressort 157. On observe que l'effort F généré suit une loi d'effort à double pente. Au cours de la première phase, les deux portions de ressort sont sollicitées, de sorte que l'effort généré présente une variation linéaire ayant une première pente. Au cours de la deuxième phase, seule la deuxième portion de ressort est sollicitée, de sorte que l'effort présente une variation linéaire ayant une deuxième pente; supérieure à la première pente.

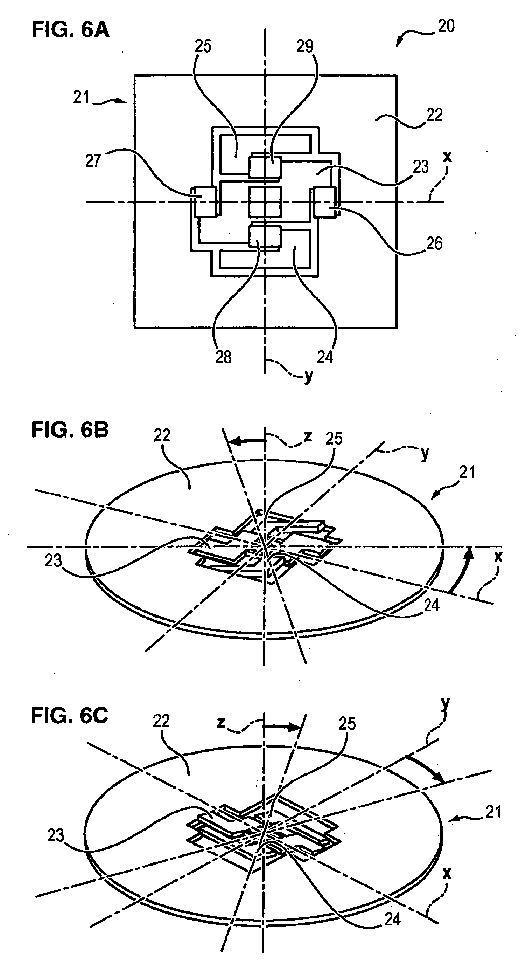

Dans une variante du premier mode de réalisation, la liaison rotule 150 reliant la manette 102 au bâti 101 peut être remplacée par une liaison cardan 20. Les figures 6A à 6C représentent de manière schématique un exemple de système de cardan 21 pouvant être utilisé pour monter la manette 102 sur le boîtier 101 du minimanche 100. Le système représenté permet de réduire les forces de frottement et d'éliminer tout risque de grippage. De plus, la forme généralement plane du système à cardan 21 représenté permet de libérer de l'espace au-dessus du centre de rotation 132 de la manette 102, ce qui est particulièrement avantageux dans un environnement exigu.

Le système de cardan 21 représenté sur les figures 6A à 6C comprend une base plane 22, une pièce intermédiaire plane 23, et deux pièces de support 24 et 25. La base plane 22 est fixée au bâti 101 du minimanche 100 et la manette 102 est fixée aux deux pièces de support 24 et 25:

Le système de cardan 21 comprend en outre deux lames flexibles 26, 27 liant la base 22 à la pièce intermédiaire 23 et autorisant une rotation de la pièce intermédiaire 23 par rapport à la base 22 plane selon un premier axe de rotation (axe x).

Le système de cardan 21 comprend également deux lames flexibles 28, 29 liant la pièce intermédiaire 23 aux pièces de support 24, 25 et autorisant une rotation des pièces de support 24, 25 par rapport à la pièce intermédiaire 23 selon un deuxième axe de rotation (axe y) perpendiculaire au premier axe de rotation.

De cette manière, la manette 102 peut être entrainée en rotation par rapport au boîtier selon les deux axes de rotation x et y, ces deux axes de rotation étant fixes par rapport au bâti 101.

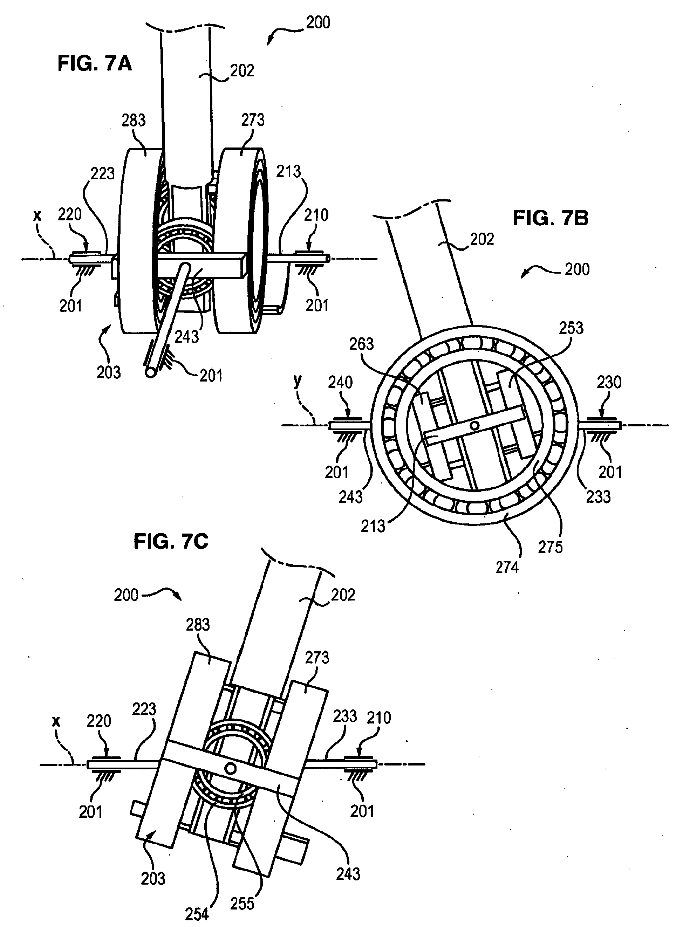

Les figures 7A à 7C représentent de manière schématique un minimanche 200 selon un deuxième mode de réalisation de l'invention.

Dans ce deuxième mode de réalisation, les ensembles de berceaux 153, 163, 173 et 183 ont été remplacés par des roulements à billes 253, 263, 273, 283, chaque roulement comprenant une bague manette 255, 265, 275, 285 et une bague bâti 254, 264, 274, 284.

Sur les figures 7A à 7C, le minimanche 200 comprend un bâti 201, une manette 202 montée mobile en rotation par rapport au bâti, et un ensemble mécanique 203 de liaison de la manette au bâti.

L'ensemble mécanique de liaison 203 comprend deux paires de pièces de liaison, incluant une première paire de pièces de liaison 213, 223 et une deuxième paire de pièce de liaison 233, 243.

Chaque pièce de liaison 213, 223 de la première paire est montée mobile en rotation par rapport au bâti 201 autour d'un premier axe de rotation (axe X) par le biais de premières liaisons pivot 210 et 220.

De même, chaque pièce de liaison 233, 243 de la deuxième paire est montée mobile par rapport au bâti 201 autour d'un deuxième axe de rotation (axe Y) par le biais de deuxièmes liaisons pivot 230 et 240.

L'ensemble mécanique de liaison 203 comprend également quatre roulements 253, 263, 273 et 283, incluant un premier couple de roulements 253, 263 et un deuxième couple de roulements 273, 283. Chaque roulement comprend une bague manette et une bague bâti.

Dans chaque roulement 253, 263 du premier couple, la bague bâti 254, 264 est montée solidaire des premières pièces de liaison 213, 223, de sorte qu'une rotation des premières pièces de liaison 213, 223 autour du premier axe de rotation X entraine également une rotation des roulements 253, 263. De plus, la bague manette 255, 265 est montée mobile en rotation par rapport à la bague bâti 254, 264 selon un troisième axe de rotation (axe Y') perpendiculaire au premier axe de rotation (axe X).

De même, dans chaque roulement 273, 283 du deuxième couple, la bague bâti 274, 284 est montée solidaire des deuxièmes pièces de liaison 233, 243, de sorte qu'une rotation des deuxièmes pièces de liaison 233, 243 autour du deuxième axe de rotation Y entraine également une rotation des roulements 273, 283. De plus, la bague manette 275, 285 est montée mobile en rotation par rapport à la bague bâti 274, 284 selon un quatrième axe de rotation (axe X') perpendiculaire au deuxième axe de rotation (axe Y).

Dans ce deuxième mode de réalisation, les bagues manette 255, 265, 275 et 285 constituent des pièces intermédiaires de l'ensemble mécanique de liaison 203 pour lier les pièces de liaison à la manette 202.

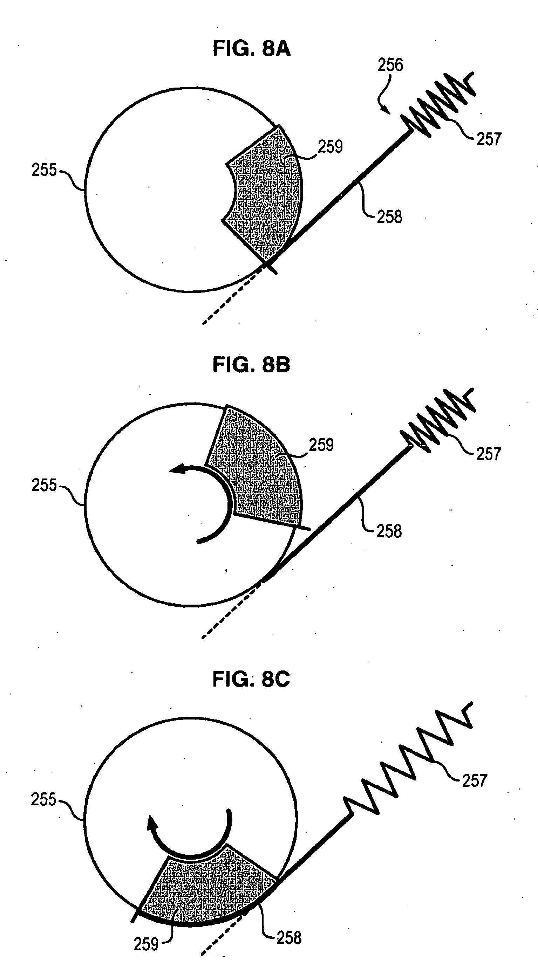

Comme cela est illustré sur les figures 8A à 8C, le minimanche 200 comprend un organe de rappel 256 s'étendant entre une pièce de liaison 223 et la bague manette 255, comme dans le premier mode de réalisation. L'organe de rappel 256 est apte à exercer un couple de rappel tendant à s'opposer à une rotation de la bague manette 255 par rapport à la bague bâti 254, c'est-à-dire à s'opposer à une rotation de la manette 202 par rapport au bâti 201. L'organe de rappel 256 comprend un ressort linéique hélicoïdal 257 et un ruban 258 venant s'enrouler autour d'une portion de surface cylindrique 259 de la bague manette 255.

La figure 8A illustre l'organe de rappel 256 lorsque la manette 202 est en position neutre.

La figure 8B illustre l'organe de rappel 256 lorsque la manette 202 est entrainée en rotation autour de l'axe Y' dans un premier sens de rotation. La bague manette 255, entrainée en rotation par la manette 202, n'entraîne pas le ruban 258, lequel ne s'enroule pas autour de la portion de cylindre de la bague manette 255, laissant inchangée l'élongation du ressort 257.

La figure 8C illustre l'organe de rappel 256 lorsque la manette 202 est entrainée en rotation autour de l'axe Y' dans un deuxième sens de rotation, opposé au premier sens de rotation. La manette 202 entraine en rotation la bague manette 255, ce qui a pour effet d'enrouler le ruban 258 autour de la bague manette 255. Le ruban 258 exerce une traction sur le ressort 257 qui s'allonge et génère un effort de rappel tendant à s'opposer à la rotation de la bague manette 255 par rapport à la bague bâti 254.

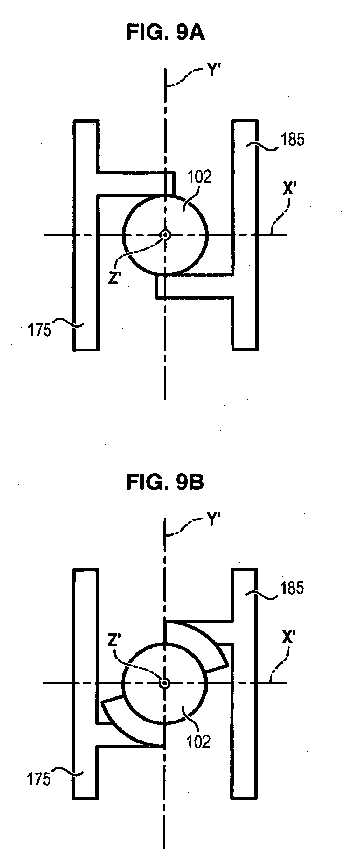

Les figures 9A et 9B représentent de manière schématique un montage alternatif permettant d'obtenir une dissociation des deux sens de rotation sur un même axe. Dans cette alternative, Chaque berceau manette 175 et 185 présente une butée. La partie inférieure 122 de la manette 102 est apte à venir en appui contre une butée d'un berceau manette 175 et 185 pour entrainer en rotation le berceau manette.

Les butées sont agencées de sorte qu'une rotation de la manette 102 selon le quatrième axe de rotation (axe X') dans un premier sens entraine une rotation du berceau manette 175 par rapport au berceau bâti 174, sans entrainer le berceau manette 185 en rotation. A l'inverse, une rotation de la manette 102 selon le quatrième axe de rotation (axe X') dans un deuxième sens, opposé au premier sens, entraine une rotation du berceau manette 185 par rapport au berceau bâti 184, sans entrainer le berceau manette 175 en rotation.

Sur la figure 9A, la manette 102 est en contact avec les butées selon une ligne de contact rectiligne. Sur la figure 9B, la manette 202 est en contact avec les butées selon une surface de contact cylindrique. Dans ces deux cas, le contact entre la manette 102 et les butées autorise une rotation de la manette 102 relativement aux berceaux manette 175 et 185 autour de l'axe Z' sans engendrer aucune rotation parasite des berceaux manette 175 et 185 par rapport aux berceaux bâti 174 et 184, ce qui est indispensable pour ne pas générer de couplage entre les axes X' et Y'.

On notera que le montage alternatif des figures 9A et 9B nécessite que le dispositif inclut une liaison de la manette 102 avec le bâti 101, telle qu'une liaison rotule 150 par exemple.

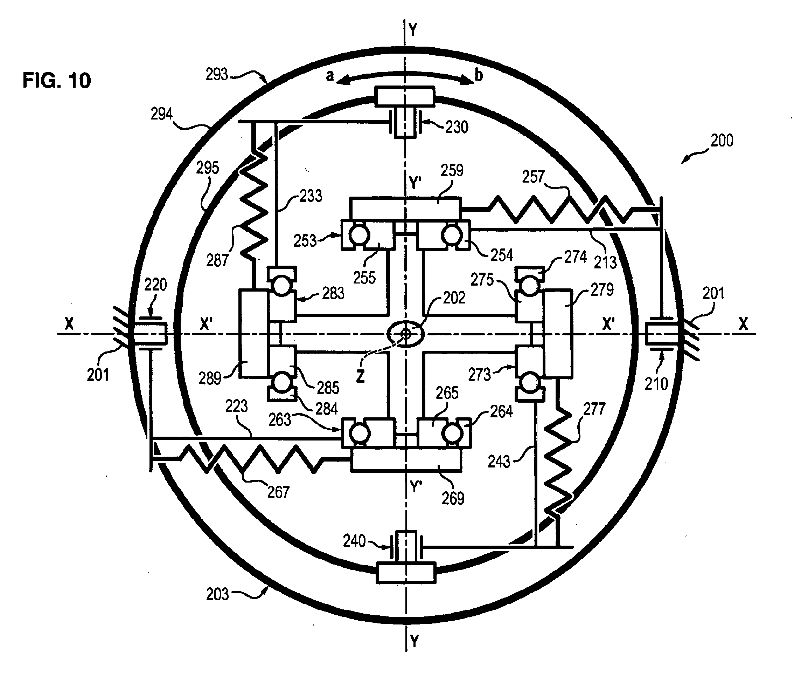

La figure 10 représente de manière schématique une première variante du minimanche 200 des figures 7A à 7C.

Dans cette première variante, les pivots 220 et 210 sont montés fixes sur la bâti 201, tandis que les pivots 230 et 240 sont montés rotatifs par rapport au bâti 201. Autrement dit, les deuxièmes pièces de liaison 233 et 243 sont montées mobiles en rotation par rapport au bâti 201 autour d'un cinquième axe (axe Z), le cinquième axe étant perpendiculaire au premier axe (axe X) et au deuxième axe (axe Y) et passant par le centre de rotation O de la manette 202.

A cet effet, l'ensemble mécanique de liaison 203 comprend un cinquième roulement 293 comprenant une bague externe 294 montée fixe par rapport au bâti 201 et une bague interne 295 montée mobile en rotation par rapport à la bague externe 294 (et donc par rapport au bâti 201) autour de l'axe Z. Les pièces de liaison 233 et 243 sont montées rotatives sur la bague interne 295 autour de l'axe Y par le biais des pivots 230 et 240.

Ce montage autorise une rotation de l'un des référentiels fixe (Y défini par les pièces de liaison 233 et 243) par rapport à l'autre référentiel fixe (X défini par les pièces de liaison 213 et 223) autour de l'axe Z, alors que les deux axes X' et Y' du référentiel pivotant restent fixent et orthogonaux l'un par rapport à l'autre.

Ce montage autorise une variation de l'angle formé entre le premier axe de rotation X et lé deuxième axe de rotation Y, le premier axe de rotation X étant fixe par rapport au bâti 201.

Grâce à ce montage, un désalignement entre le deuxième axe de rotation Y et le troisième axe de rotation Y' est possible. Ce degré de liberté supplémentaire, rendu indispensable par projection des vecteurs rotations, permet un déplacement de la manette 202 en rotation simultanément selon le premier axe de rotation X et selon le deuxième axe de rotation Y.

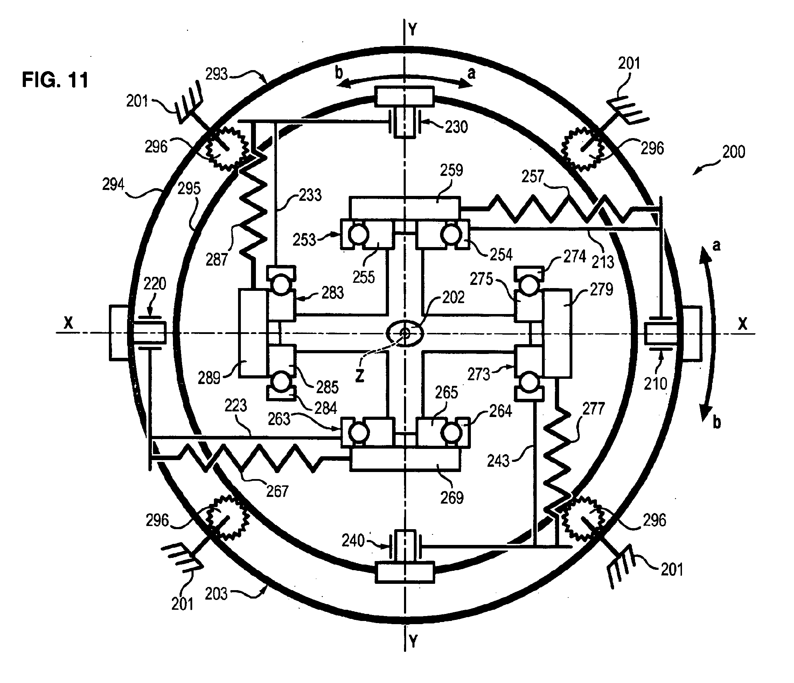

La figure 11 représente de manière schématique une deuxième variante du minimanche des figures 7A à 7C dans laquelle le premier axe de rotation X et le deuxième axe de rotation Y sont mobiles par rapport au bâti 201.

Dans cette deuxième variante, l'ensemble mécanique de liaison 203 comprend un cinquième roulement 293 comprenant une bague externe 294 et une bague interne 295, chacune des bagues 294 et 295 étant montée mobile en rotation par rapport au bâti 201 autour de l'axe Z. L'ensemble mécanique de liaison 203 comprend également une pluralité de galets 296 interposés entre les bagues 294 et 295 et montés mobiles en rotation par rapport au bâti 201 autour de leur axe, lesquels sont parallèles à l'axe Z et fixes par rapport au bâti 201.

Les galets 296 permettent de lier en rotation les bagues 294 et 295 de sorte qu'une rotation de l'une des bagues par rapport au bâti 201 dans un sens entraine concomitamment une rotation de l'autre bague en sens opposé d'un angle identique.

Ce montage autorise également une rotation des référentiels fixes X et Y l'un par rapport à l'autre (défini d'une part par les pièces de liaison 213 et 223 et d'autre part par les pièces de liaison 233 et 243) autour de l'axe Z, alors que les deux axes X' et Y' du référentiel pivotant restent fixent et orthogonaux l'un par rapport à l'autre.

Grâce à ce montage, un désalignement entre le premier axe de rotation X et le quatrième axe de rotation X' d'une part, et entre le deuxième axe de rotation Y et le troisième axe de rotation Y' d'autre part, est possible, les désalignements étant symétriques.

Ce montage, grâce à ce degré de liberté supplémentaire rendu indispensable par projection des vecteurs rotations, permet également un déplacement de la manette 202 en rotation simultanément selon le premier axe de rotation X et selon le deuxième axe de rotation Y, et ceci sans induire de rotation de la manette selon l'axe Z'.

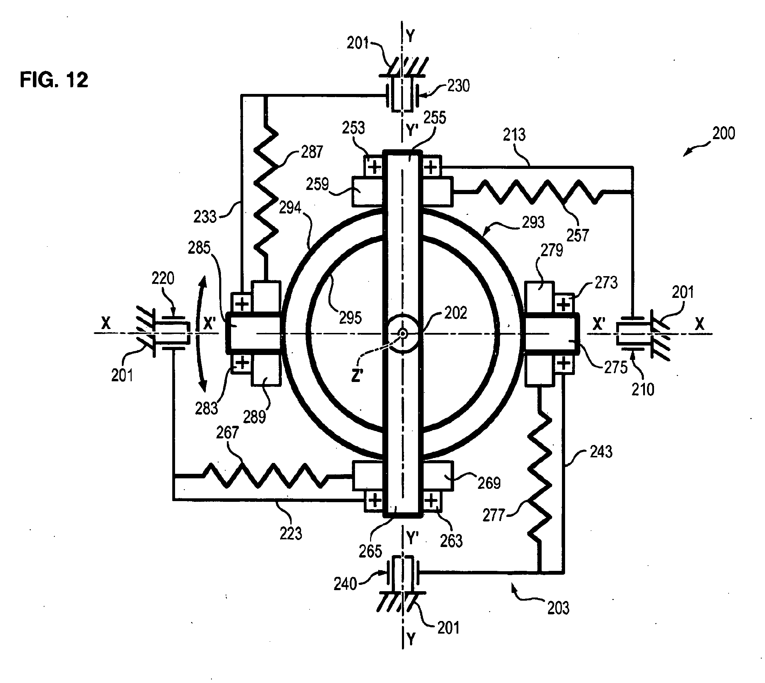

La figure 12 représente de manière schématique une troisième variante du minimanche 200 des figures 7A à 7C dans laquelle les roulements sont mobiles en rotation.

Dans cette troisième variante, les roulements 253 et 263 sont montés fixes par rapport à la manette 202, tandis que les roulements 273 et 283 sont montés rotatifs par rapport à la manette 202. Autrement dit, les pièces intermédiaires 275 et 285 (formées par les bagues mobiles des roulements 273 et 283) sont montées mobiles en rotation par rapport à la manette 202. autour d'un cinquième axe (axe Z'), le cinquième axe étant perpendiculaire au troisième axe (axe Y') et au quatrième axe (axe X') et passant par le centre de rotation O de la manette 202.

A cet effet, l'ensemble mécanique de liaison 203 comprend un cinquième roulement 293 comprenant une bague interne 295 montée fixe par rapport à la manette 202 et une bague externe 294 montée mobile par rapport à la bague interne 295 (et donc par rapport à la manette 202) autour de l'axe Z'. Les pièces intermédiaires 275 et 285 sont montées fixes sur la bague externe 294 du cinquième roulement 293.

Ce montage autorise une rotation de la manette 202 par rapport à l'un des référentiels pivotants (défini par les pièces de liaison 233 et 243) autour de l'axe Z' (axe longitudinal de la manette 202).

Ce montage autorise une variation de l'angle formé entre le troisième axe de rotation Y' et le quatrième axe de rotation X', le troisième axe de rotation Y' étant fixe par rapport à la manette 202.

Grâce à ce montage, un désalignement entre le troisième axe de rotation Y' et le deuxième axe de rotation Y est possible. Ce degré de liberté supplémentaire, rendu indispensable par projection des vecteurs rotations, permet un déplacement de la manette 202 en rotation simultanément selon le premier axe de rotation X et selon le deuxième axe de rotation Y.

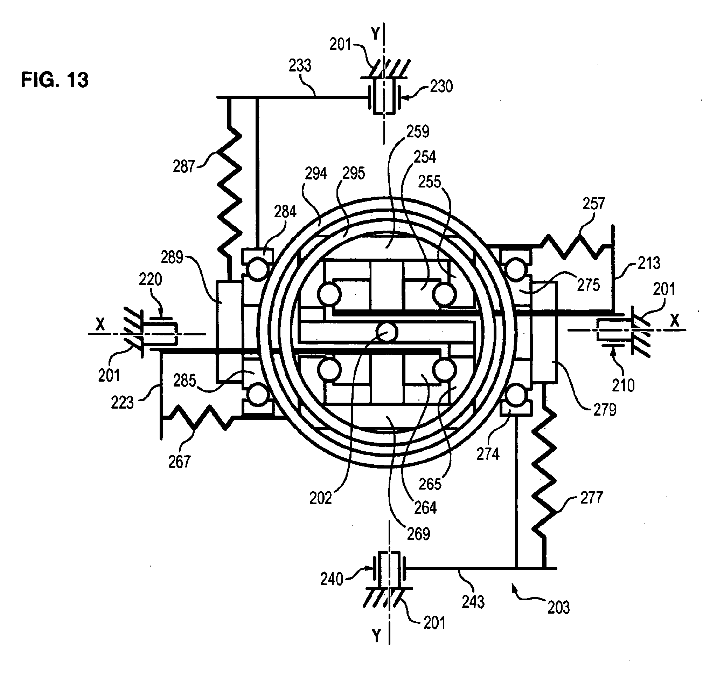

La figure 13 représente de manière schématique une quatrième variante du minimanche des figures 7A à 7C. Cette quatrième variante présente un fonctionnement identique à celui de la troisième variante. Alors que la troisième variante permet l'emploi de roulements 253, 263, 273 et 283 identiques, la quatrième variante est plus compacte en incluant des roulements imbriqués.

Dans cette quatrième variante, la bague externe 294 du cinquième roulement 293 est fixée aux bagues manette internes 275 et 285 des roulements 273 et 283 de la deuxième paire.

La bague interne 295 du cinquième roulement 293 est fixée aux bagues manette externes 255 et 265 des roulements 253 et 263 de la première paire.

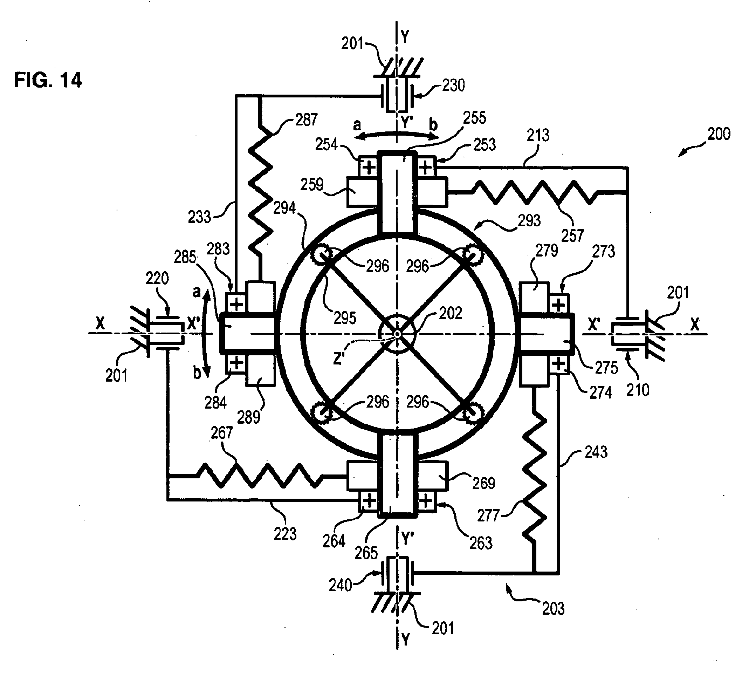

La figure 14 représente de manière schématique une cinquième variante du minimanche des figures 7A à 7C, dans laquelle le quatrième axe de rotation X' et le troisième axe de rotation Y' sont mobiles par rapport à la manette 202.

Dans cette cinquième variante, l'ensemble mécanique de liaison 203 comprend un cinquième roulement 293 comprenant une bague externe 294 et une bague interne 295, chacune des bagues 294 et 295 étant montée mobile en rotation par rapport à la manette 202 autour de l'axe Z'. L'ensemble mécanique de liaison 203 comprend également une pluralité de galets 296 interposés entre les bagues 294 et 295 et montés mobile en rotation par rapport à la manette autour de leurs axes, lesquels sont parallèles à l'axe Z' et fixes par rapport à la manette 202.

Les galets 296 permettent de lier en rotation les bagues 294 et 295 de sorte qu'une rotation de l'une des bagues par rapport à la manette 202 dans un sens entraine concomitamment une rotation de l'autre bague en sens opposé d'un angle identique.

Ce montage autorise une rotation de la manette 202 par rapport à chacun des référentiels pivotants (les référentiels pivotants étant définis respectivement par les pièces de liaison 213 et 223 et par les pièces de liaison 233 et 243) autour de l'axe Z'.

Grâce à ce montage, un désalignement entre le premier axe de rotation X et le quatrième axe de rotation X' d'une part, et entre le deuxième axe de rotation Y et le troisième axe de rotation Y' d'autre part, est possible, les désalignements étant symétriques.

Ce montage, grâce à ce degré de liberté supplémentaire rendu indispensable par projection des vecteurs rotations, permet également un déplacement de la manette 202 en rotation simultanément selon le premier axe de rotation X et selon le deuxième axe de rotation Y, et ceci sans induire de rotation de la manette selon l'axe Z'.

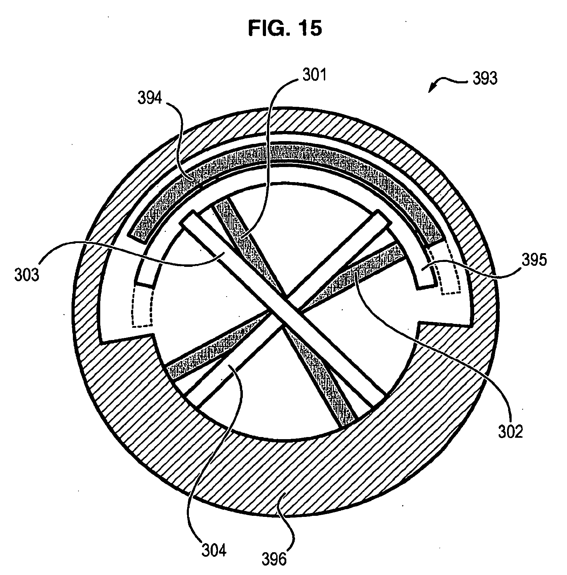

La figure 15 représente de manière schématique un organe de liaison 393 pouvant être utilisé dans la variante de la figure 14 à la place du cinquième roulement 293 et de la pluralité de galets 296 associés.

L'organe de liaison 393 représenté comprend une première partie 394, une deuxième partie 395 et une troisième partie 396. La première partie 394 est montée mobile par rapport à la troisième partie 396. De même, la deuxième partie 395 est montée mobile par rapport à la troisième partie 396.

L'organe de liaison 393 comprend également deux couples de lames flexibles 301 et 302, 303 et 304. Chaque lame flexible 301, 302 du premier couple relie la première partie 394 et la troisième partie 396 entre elles et est déformable élastiquement pour autoriser une rotation de la troisième partie 396 par rapport à la première partie 394. Les lames flexibles 301 et 302 sont aptes à générer un couple de rappel tendant à s'opposer à la rotation des parties 394 et 396 entre elles.

De même, chaque lame flexible 303, 304 du deuxième couple relie la deuxième partie 395 et la troisième partie 396 entre elles et est déformable élastiquement pour autoriser une rotation de la troisième partie 396 par rapport à la deuxième partie 395. Les lames flexibles 303, 304 sont aptes à générer un couple de rappel tendant à s'opposer à la rotation des parties 395 et 396 entre elles.

La première partie 394 est fixée aux pièces intermédiaires 275 et 285.

La deuxième partie 395 est fixée aux pièces intermédiaires 255 et 265.

La troisième partie 396 est fixée à la manette 202.

Comme dans le cas du minimanche, de la figure 14, ce montage autorise une rotation de la manette 202 par rapport à chacun des référentiels pivotants (les référentiels pivotants étant définis respectivement par les pièces de liaison 213 et 223 et par les pièces de liaison 233 et 243) autour de l'axe Z'.

Grâce à ce montage, un désalignement entre le premier axe de rotation X et le quatrième axe de rotation X' d'une part, et entre le deuxième axe de rotation Y et le troisième axe de rotation Y' d'autre part, est possible, les désalignements étant symétriques.

Ce montage, grâce à ce degré de liberté supplémentaire rendu indispensable par projection des vecteurs rotations, permet également un déplacement de la manette 202 en rotation simultanément selon le premier axe de rotation X et selon le deuxième axe de rotation Y, et ceci sans induire de rotation de la manette selon l'axe Z'.

### REFERENCES NUMERIQUES

- 100: Minimanche (premier mode de réalisation)
- 101: Bâti
- 102: Manette
- 103: Ensemble mécanique de liaison
- 110: Liaison pivot (axe X)
- 111: Surface interne sphérique
- 112: Partie supérieure de la manette
- 113: Pièce de liaison (première paire)
- 120: Liaison pivot (axe X)
- 122: Partie inférieure de la manette
- 123: Pièce de liaison (première paire)
- 130: Liaison pivot (axe Y)
- 132: Partie intermédiaire de la manette
- 133: Pièce de liaison (deuxième paire)
- 140: Liaison pivot (axe Y)
- 142: Surface externe sphérique
- 143: Pièce de liaison (deuxième paire)
- 150: Liaison rotule
- 152: Protubérance
- 153: Ensemble de berceaux (premiers ensembles)
- 154: Berceau bâti
- 155: Berceau manette
- 156: Organe de rappel
- 157: Ressort linéique hélicoïdal
- 158: Ruban
- 159: Butée
- 162: Protubérance
- 163: Ensemble de berceaux (premiers ensembles)
- 164: Berceau bâti
- 165: Berceau manette
- 166: Organe de rappel
- 172: Protubérance
- 173: Ensemble de berceaux (deuxièmes ensembles)
- 174: Berceau bâti
- 175: Berceau manette
- 176: Organe de rappel
- 182: Protubérance
- 183: Ensemble de berceaux (deuxièmes ensembles)
- 184: Berceau bâti
- 185: Berceau manette
- 186: Organe de rappel
- 200: Minimanche (deuxième mode de réalisation)
- 201: Bâti
- 202: Manette
- 203: Ensemble mécanique de liaison
- 210: Liaison pivot (axe X)
- 213: Pièce de liaison (première paire)
- 220: Liaison pivot (axe X)
- 222: Partie inférieure de la manette
- 223: Pièce de liaison (première paire)
- 230: Liaison pivot (axe Y)
- 233: Pièce de liaison (deuxième paire)
- 240: Liaison pivot (axe Y)
- 243: Pièce de liaison (deuxième paire)
- 253: Roulement à billes (premier couple)
- 254: Bague bâti
- 255: Bague manette
- 256: Organe de rappel
- 257: Ressort linéique hélicoïdal
- 258: Ruban
- 259: Portion de surface cylindrique
- 263: Roulement à billes (premier couple)
- 264: Bague bâti
- 265: Bague manette
- 266: Organe de rappel
- 267: Ressort linéique hélicoïdal
- 269: Portion de surface cylindrique
- 273: Roulement à billes (deuxième couple)
- 274: Bague bâti
- 275: Bague manette
- 276: Organe de rappel
- 277: Ressort linéique hélicoïdal
- 279: Portion de surface cylindrique
- 283: Roulement à billes (deuxième couple)
- 284: Bague bâti
- 285: Bague manette
- 286: Organe de rappel
- 287: Ressort linéique hélicoïdal
- 289: Portion de surface cylindrique
- 293: Cinquième roulement
- 294: Bague externe
- 295: Bague interne
- 296: Galets
- 301: Lame flexible (premier couple)
- 302: Lame flexible (premier couple)
- 303: Lame flexible (deuxième couple)
- 304: Lame flexible (deuxième couple)
- 20: Liaison cardan
- 21: Système de cardan
- 22: Base plane
- 23: Pièce intermédiaire
- 24: Pièce de support
- 25: Pièce de support
- 26: Lame flexible
- 27: Lame flexible
- 28: Lame flexible
- 29: Lame flexible
- 393: Organe de liaison
- 394: Première partie de l'organe de liaison
- 395: Deuxième partie de l'organe de liaison
- 396: Troisième partie de l'organe de liaison
- 1571: Première portion de ressort
- 1572: Deuxième portion de ressort

## Revendications

1. Minimanche (100, 200) de pilotage d'un aéronef, comprenant un bâti (101, 201), une manette (102, 202) montée mobile en rotation par rapport au bâti, et un ensemble mécanique de liaison (103, 203) de la manette au bâti, l'ensemble mécanique de liaison (103, 203) comprenant :
- une première pièce de liaison (113, 123, 213, 223) montée mobile par rapport au bâti (101, 201) autour d'un premier axe de rotation (X), et
- une deuxième pièce de liaison (133, 143, 233, 243) montée mobile par rapport au bâti (101, 201) autour d'un deuxième axe de rotation (Y), le deuxième axe de rotation formant un angle non-nul avec le premier axe de rotation, **caractérisé en ce que** l'ensemble mécanique de liaison comprend en outre :
- une troisième pièce intermédiaire (155, 165, 255, 265) montée mobile en rotation par rapport à la première pièce de liaison (113, 123, 213, 223) autour d'un troisième axe de rotation (Y'),
- une quatrième pièce intermédiaire (175, 185, 275, 285) montée mobile en rotation par rapport à la deuxième pièce de liaison (133, 143, 233, 243) autour d'un quatrième axe de rotation (X'), le quatrième axe de rotation formant un angle non-nul avec le troisième axe de rotation,
et **en ce que** les pièces de liaison (113, 123, 213, 223 ; 133, 143, 233, 243) ou les pièces intermédiaires (155, 165, 255, 265 ; 175, 185, 275, 285) sont mobiles en rotation l'une par rapport à l'autre autour d'un cinquième axe de rotation (Z, Z') formant un angle non-nul respectivement avec le premier axe de rotation (X) et le deuxième axe de rotation (Y) ou avec le troisième axe de rotation (X') et le quatrième axe de rotation (Y'), de manière à autoriser respectivement une variation de l'angle formé entre le premier axe de rotation et le deuxième axe de rotation ou de l'angle formé entre le troisième axe de rotation et le quatrième axe de rotation.

2. Minimanche selon la revendication 1, dans lequel l'ensemble mécanique de liaison (203) comprend un organe de liaison (293) comprenant une bague externe (294) et une bague interne (295) montées rotatives l'une par rapport à l'autre autour du cinquième axe de rotation (Z, Z'), chacune des pièces de liaison (213, 223 ; 233, 243) ou respectivement des pièces intermédiaires (255, 265 ; 275, 285) étant reliée à une bague (294, 295) respective de l'organe de liaison (293), la manette (102, 202) étant solidaire de la troisième pièce intermédiaire (255, 265) et/ou de la quatrième pièce intermédiaire (275, 285).

3. Minimanche selon la revendication 2, dans lequel l'une des bagues (294) de l'organe de liaison (293) est fixe par rapport à la première pièce de liaison (213, 223) et l'autre bague (295) est fixe par rapport à la deuxième pièce de liaison (233, 243).

4. Minimanche selon la revendication 3, dans lequel l'une des bagues (294 ou 295) de l'organe de liaison (293) est fixe par rapport au bâti (201), de manière à autoriser une rotation seulement de la première pièce de liaison (213, 223) ou seulement de la deuxième pièce de liaison (233, 243) par rapport au bâti (201) autour du cinquième axe de rotation (Z).

5. Minimanche selon la revendication 3, dans lequel l'organe de liaison (293) comprend au moins un galet (296) monté rotatif autour d'un axe de rotation fixe par rapport au bâti (201), le galet (296) étant interposé entre la bague interne (295) et la bague externe (294) de sorte qu'une rotation de l'une des bagues par rapport au bâti (201) entraine concomitamment une rotation en sens opposé de l'autre bague par rapport au bâti (201).

6. Minimanche selon la revendication 2, dans lequel l'une des bagues (295) de l'organe de liaison (293) est fixe par rapport à la troisième pièce intermédiaire (255, 265) et l'autre bague (294) est fixe par rapport à la quatrième pièce intermédiaire (275, 285).

7. Minimanche selon la revendication 6, dans lequel l'une des bagues (294 ou 295) de l'organe de liaison (293) est fixe par rapport à la manette (202), de manière à autoriser une rotation de la manette (202) seulement par rapport à la troisième pièce intermédiaire (255, 265) ou seulement par rapport à la quatrième pièce intermédiaire (275, 285) autour du cinquième axe de rotation (Z').

8. Minimanche selon la revendication 6, dans lequel l'organe de liaison (293) comprend au moins un galet (296) monté rotatif autour d'un axe de rotation fixe par rapport à la manette (202), le galet (296) étant interposé entre la bague interne (295) et la bague externe (294) de sorte qu'une rotation de l'une des bagues (294, 295) par rapport à la manette (202) entraine concomitamment une rotation en sens opposé de l'autre bague (294, 295) par rapport à la manette (202).

9. Minimanche selon la revendication 1, dans lequel l'ensemble mécanique de liaison (203) comprend un organe de liaison (393) comprenant une partie fixe (396) et une partie (394, 395) montée mobile par rapport à la partie fixe, l'organe de liaison (393) comprenant au moins deux lames flexibles (301, 302 ; 303, 304), chaque lame flexible (301, 302 ; 303, 304) reliant les parties (394, 395, 396) entre elles et étant déformable élastiquement pour autoriser une rotation de la partie mobile (394, 395) par rapport à la partie fixe (396), les lames flexibles (301, 302 ; 303, 304) étant aptes à générer un couple de rappel tendant à s'opposer à la rotation des parties (394, 395, 396) entre elles.

10. Minimanche selon la revendication 9, dans lequel la troisième pièce intermédiaire (255, 265) ou la quatrième pièce intermédiaire (275, 285) est fixée à une partie (394, 395) de l'organe de liaison (393) et la manette (202) est fixée à l'autre partie (396) de l'organe de liaison (393).

11. Minimanche selon l'une des revendications qui précèdent, dans lequel la manette (102, 202) est reliée au bâti (101, 201) par une liaison rotule (150) autorisant une rotation de la manette (102, 202) selon les trois axes de rotation (X, Y, Z ; Z') par rapport au bâti (101, 201).

12. Minimanche selon la revendication 1, dans lequel la manette (102, 202) est reliée au bâti (101, 201) par une liaison cardan autorisant seulement une rotation de la manette (102, 202) selon le premier axe (X) et une rotation de la manette (102, 202) selon le deuxième axe (Y) par rapport au bâti (101, 201).

13. Minimanche selon la revendication 12, dans lequel la manette (102, 202) est apte à venir en appui simple sur la troisième pièce intermédiaire et sur la quatrième pièce intermédiaire pour solliciter les pièces intermédiaires en rotation respectivement selon les troisième et quatrième axes (Y', X'), de manière à autoriser une rotation relative des pièces intermédiaires par rapport à la manette (102, 202) selon le cinquième axe de rotation (Z, Z').

14. Minimanche selon la revendication 13, dans lequel l'une des pièces intermédiaires comprend une butée agencée de sorte que la manette (202) est apte à venir en appui sur la butée pour solliciter la pièce intermédiaire et provoquer la rotation de la pièce intermédiaire dans un seul sens de sollicitation.

15. Minimanche selon la revendication 14, dans lequel la manette (202) est apte à venir en appui sur la butée selon une ligne de contact rectiligne, parallèle au cinquième axe de rotation (Z, Z').

16. Minimanche selon la revendication 14, dans lequel la manette (202) est apte à venir en appui sur la butée selon une surface de contact cylindrique, ayant un axe de révolution parallèle au cinquième axe de rotation (Z, Z').

17. Minimanche selon l'une des revendications qui précèdent, comprenant un organe de rappel (156, 166, 176, 186, 256, 266, 276, 286) apte à solliciter l'une des pièces intermédiaires (155, 165, 175, 185, 255, 265, 275, 285) de l'organe de liaison (253, 263, 273, 283) pour s'opposer à la rotation de la pièce intermédiaire.

18. Minimanche selon la revendication 17, dans lequel l'organe de rappel (156, 166, 176, 186, 256, 266, 276, 286) comprend un ressort de traction (157, 167, 177, 187, 257, 267, 277, 287) reliant la première pièce de liaison (113, 123, 213, 223) ou la deuxième pièce de liaison (133, 143, 233, 243) à la pièce intermédiaire (155, 165, 175, 185, 255, 265, 275, 285) qui est entrainée en rotation sous l'action de la manette (202).

19. Minimanche selon la revendication 18, dans lequel l'organe de rappel (156, 166, 176, 186, 256, 266, 276, 286) comprend un ruban (158, 258) reliant le ressort de traction (157, 167, 177, 187, 257, 267, 277, 287) et la pièce intermédiaire (155, 165, 175, 185, 255, 265, 275, 285), leruban étant apte à s'enrouler autour d'un élément cylindrique (259, 269, 279, 289) et solidaire de la pièce intermédiaire (155, 165, 175, 185, 255, 265, 275, 285).

## Patentansprüche

1. Sidestick (100, 200) zur Steuerung eines Luftfahrzeugs, der ein Gehäuse (101, 201), einen Griff (102, 202), der in Bezug zu dem Gehäuse drehbeweglich gelagert ist, und eine mechanische Baugruppe zur Verbindung (103, 203) des Griffs mit dem Gehäuse umfasst, wobei die mechanische Verbindungsbaugruppe (103, 203) Folgendes umfasst:
- ein erstes Verbindungsteil (113, 123, 213, 223), das in Bezug zum Gehäuse (101, 201) um eine erste Drehachse (X) herum beweglich gelagert ist, und
- ein zweites Verbindungsteil (133, 143, 233, 243), das in Bezug zu dem Gehäuse (101, 201) um eine zweite Drehachse (Y) herum beweglich gelagert ist, wobei die zweite Drehachse einen Winkel von nicht Null mit der ersten Drehachse bildet, **dadurch gekennzeichnet, dass** die mechanische Baugruppe zur Verbindung ferner umfasst:
- ein drittes, dazwischenliegendes Teil (155, 165, 255, 265), das in Bezug zum ersten Verbindungsteil (113, 123, 213, 223) um eine dritte Drehachse (Y') herum drehbeweglich gelagert ist, und
- ein viertes, dazwischenliegendes Teil (175, 185, 275, 285), das in Bezug zu dem zweiten Verbindungsteil (133, 143, 233, 243) um eine vierte Drehachse (X') herum drehbeweglich gelagert ist, wobei die vierte Drehachse einen Winkel von nicht Null mit der dritten Drehachse bildet,
und dass die Verbindungsteile (113, 123, 213, 223 ; 133, 143, 233, 243) oder die dazwischenliegenden Teile (155, 165, 255, 265 ; 175, 185, 275, 285) in Bezug zueinander um eine fünfte Drehachse (Z, Z') herum drehbeweglich sind, die einen Winkel von nicht Null mit der ersten Drehachse (X) und der zweiten Drehachse (Y) beziehungsweise mit der dritten Drehachse (X') und der vierten Drehachse (Y') bildet, derart, dass eine Veränderung des Winkels, der zwischen der ersten Drehachse und der zweiten Drehachse gebildet wird, oder des Winkels, der zwischen der dritten Drehachse und der vierten Drehachse gebildet wird, zugelassen wird.

2. Sidestick nach Anspruch 1, wobei die mechanische Verbindungsbaugruppe (203) ein Verbindungsorgan (293) umfasst, das einen äußeren Ring (294) und einen inneren Ring (295) umfasst, die in Bezug zueinander um die fünfte Drehachse (Z, Z') herum drehbar gelagert sind, wobei jedes der Verbindungsteile (213, 223 ; 233, 243) beziehungsweise der dazwischenliegenden Teile (255, 265 ; 275, 285) mit einem entsprechenden Ring (294, 295) des Verbindungsorgans (293) verbunden ist, wobei der Griff (102, 202) fest mit dem dritten dazwischenliegenden Teil (255, 265) und/oder dem vierten dazwischenliegenden Teil (275, 285) verbunden ist.

3. Sidestick nach Anspruch 2, wobei einer der Ringe (294) des Verbindungsorgans (293) in Bezug zum ersten Verbindungsteil (213, 223) fest ist und der andere Ring (295) in Bezug zum zweiten Verbindungsteil (233, 243) fest ist.

4. Sidestick nach Anspruch 3, wobei einer von den Ringen (294 oder 295) des Verbindungsorgans (293) in Bezug zum Gehäuse (201) fest ist, derart, dass eine Drehung einzig des ersten Verbindungsteils (213, 223) oder einzig des zweiten Verbindungsteils (233, 243) in Bezug zum Gehäuse (201) um die fünfte Drehachse (Z) herum zugelassen wird.

5. Sidestick nach Anspruch 3, wobei das Verbindungsorgan (293) mindestens eine Rolle (296) umfasst, die um eine Drehachse herum drehbar ist, die in Bezug zum Gehäuse (201) fest ist, wobei die Rolle (296) derart zwischen dem inneren Ring (295) und dem äußeren Ring (294) angeordnet ist, dass eine Drehung von einem der Ringe in Bezug zu dem Gehäuse (201) begleitend eine Drehung des anderen Rings in die entgegengesetzte Richtung in Bezug zu dem Gehäuse (201) mit sich bringt.

6. Sidestick nach Anspruch 2, wobei einer der Ringe (295) des Verbindungsorgans (293) in Bezug zum dritten dazwischenliegenden Teil (255, 265) fest ist und der andere Ring (294) in Bezug zum vierten dazwischenliegenden Teil (275, 285) fest ist.

7. Sidestick nach Anspruch 6, wobei einer von den Ringen (294 oder 295) des Verbindungsorgans (293) in Bezug zum Griff (202) fest ist, derart, dass eine Drehung des Griffs (202) einzig in Bezug zum dritten dazwischenliegenden Teil (255, 265) oder einzig in Bezug zum vierten dazwischenliegenden Teil (275, 285) um die fünfte Drehachse (Z') herum zugelassen wird.

8. Sidestick nach Anspruch 6, wobei das Verbindungsorgan (293) mindestens eine Rolle (296) umfasst, die um eine Drehachse herum drehbar gelagert ist, die in Bezug zum Griff (202) fest ist, wobei die Rolle (296) derart zwischen dem inneren Ring (295) und dem äußeren Ring (294) angeordnet ist, dass eine Drehung von einem der Ringe (294, 295) in Bezug zu dem Griff (202) begleitend eine Drehung des anderen Rings (294, 295) in die entgegengesetzte Richtung in Bezug zu dem Griff (202) mit sich bringt.

9. Sidestick nach Anspruch 1, wobei die mechanische Verbindungsbaugruppe (203) ein Verbindungsorgan (393) umfasst, das einen festen Teil (396) und einen Teil (394, 395) umfasst, der in Bezug zum festen Teil beweglich gelagert ist, wobei das Verbindungsorgan (393) mindestens zwei biegsame Blätter (301, 302 ; 303, 304) umfasst, wobei jedes biegsame Blatt (301, 302 ; 303, 304) die Teile (394, 395, 396) untereinander verbindet und elastisch verformbar ist, um eine Drehung des beweglichen Teils (394, 395) in Bezug zum festen Teil (396) zuzulassen, wobei die beweglichen Blätter (301, 302 ; 303, 304) geeignet sind, ein Rückstellmoment zu erzeugen, das dazu neigt, der Drehung der Teile (394, 395, 396) untereinander entgegen zu wirken.

10. Sidestick nach Anspruch 9, wobei das dritte dazwischenliegende Teil (255, 265) oder das vierte dazwischenliegende Teil (275, 285) an einem Teil (394, 395) des Verbindungsorgans (393) befestigt ist und der Griff (202) an dem anderen Teil (396) des Verbindungsorgans (393) befestigt ist.

11. Sidestick nach einem der vorhergehenden Ansprüche, wobei der Griff (102, 202) mit dem Gehäuse (101, 201) durch eine Kugelgelenkverbindung (150) verbunden ist, die eine Drehung des Griffs (102, 202) entlang den drei Drehachsen (X, Y, Z ; Z') in Bezug zum Gehäuse (101, 201) zulässt.

12. Sidestick nach Anspruch 1, wobei der Griff (102, 202) mit dem Gehäuse (101, 201) durch eine Kardangelenkverbindung verbunden ist, die einzig eine Drehung des Griffs (102, 202) entlang der ersten Achse (X) und eine Drehung des Griffs (102, 202) entlang der zweiten Achse (Y) in Bezug zum Gehäuse (101, 201) zulässt.

13. Sidestick nach Anspruch 12, wobei der Griff (102, 202) geeignet ist, in einfache Auflage auf dem dritten dazwischenliegenden Teil und auf dem vierten dazwischenliegenden Teil zu kommen, um die dazwischenliegenden Teile entlang der dritten beziehungsweise der vierten Achse (Y', X') drehbar zu beanspruchen, derart, dass eine relative Drehung der dazwischenliegenden Teile in Bezug zum Griff (102, 202) entlang der fünften Drehachse (Z, Z') zugelassen wird.

14. Sidestick nach Anspruch 13, wobei eines der dazwischenliegenden Teile einen Anschlag umfasst, der derart angeordnet ist, dass der Griff (202) geeignet ist, auf dem Anschlag in Auflage zu kommen, um das dazwischenliegende Teil zu beanspruchen und die Drehung des dazwischenliegenden Teils in eine einzige Beanspruchungsrichtung zu bewirken.

15. Sidestick nach Anspruch 14, wobei der Griff (202) geeignet ist, auf dem Anschlag entlang einer geradlinigen Berührungslinie in Auflage zu kommen, die parallel zur fünften Drehachse (Z, Z') ist.

16. Sidestick nach Anspruch 14, wobei der Griff (202) geeignet ist, auf dem Anschlag entlang einer zylindrischen Berührungslinie in Auflage zu kommen, die eine Rotationsachse aufweist, die parallel zur fünften Drehachse (Z, Z') ist.

17. Sidestick nach einem der vorhergehenden Ansprüche, der ein Rückstellorgan (156, 166, 176, 186, 256, 266, 276, 286) umfasst, das geeignet ist, eines der dazwischenliegenden Teile (155, 165, 175, 185, 255, 265, 275, 285) des Verbindungsorgans (253, 263, 273, 283) zu beanspruchen, um der Drehung des dazwischenliegenden Teils entgegen zu wirken.

18. Sidestick nach Anspruch 17, wobei das Rückstellorgan (156, 166, 176, 186, 256, 266, 276, 286) eine Zugfeder (157, 167, 177, 187, 257, 267, 277, 287) umfasst, die das erste Verbindungsteil (113, 123, 213, 223) oder das zweite Verbindungsteil (133, 143, 233, 243) mit dem dazwischenliegenden Teil (155, 165, 175, 185, 255, 265, 275, 285) verbindet, das unter der Einwirkung des Griffs (202) drehbar mitgenommen wird.

19. Sidestick nach Anspruch 18, wobei das Rückstellorgan (156, 166, 176, 186, 256, 266, 276, 286) ein Band (158, 258) umfasst, das die Zugfeder (157, 167, 177, 187, 257, 267, 277, 287) und das dazwischenliegende Teil (155, 165, 175, 185, 255, 265, 275, 285) verbindet, wobei das Band geeignet ist, sich um ein zylindrisches Element (259, 269, 279, 289) herum zu wickeln, und fest mit dem dazwischenliegenden Teil (155, 165, 175, 185, 255, 265, 275, 285) verbunden ist.

## Claims

1. A joystick (100, 200) for controlling an aircraft, comprising a frame (101, 201), a lever (102, 202) mounted mobile in rotation relative to the frame, and a mechanical linking assembly (103, 203) of the lever to the frame, the mechanical linking assembly (103, 203) comprising:
- a first linking piece (113, 123, 213, 223) mounted mobile relative to the frame (101, 201) about a first axis of rotation (X), and
- a second linking piece (133, 143, 233, 243) mounted mobile relative to the frame (101, 201) about a second axis of rotation (Y), the second axis of rotation forming a non-zero angle with the first axis of rotation,
**characterized in that** the mechanical linking assembly further comprises:
- a third intermediate piece (155, 165, 255, 265) mounted mobile in rotation relative to the first linking piece (113, 123, 213, 223) about a third axis of rotation (Y'), and
- a fourth intermediate piece (175, 185, 275, 285) mounted mobile in rotation relative to the second linking piece (133, 143, 233, 243) about a fourth axis of rotation (X'), the fourth axis of rotation forming a non-zero angle with the third axis of rotation,
and **in that** the linking pieces (113, 123, 213, 223; 133, 143, 233, 243) or the intermediate pieces (155, 165, 255, 265; 175, 185, 275, 285) are mobile in rotation one relative to the other about a fifth axis of rotation (Z, Z') forming a non-zero angle respectively with the first axis of rotation (X) and the second axis of rotation (Y) or with the third axis of rotation (X') and the fourth axis of rotation (Y') so as to authorise respectively a variation of the angle formed between the first axis of rotation and the second axis of rotation or of the angle formed between the third axis of rotation and the fourth axis of rotation.

2. The joystick according to Claim 1, wherein the mechanical linking assembly (203) comprises a linking member (293) comprising an external ring (294) and an internal ring (295) rotatably mounted one relative to the other about the fifth axis of rotation (Z, Z'), each of the linking pieces (213, 223; 233, 243) or respectively the intermediate pieces (255, 265; 275, 285) being connected to a respective ring (294, 295) of the linking member (293), the lever (102, 202) being connected to the third intermediate piece (255, 265) and/or of the fourth intermediate piece (275, 285).

3. The joystick according to Claim 2, wherein one of the rings (294) of the linking member (293) is fixed relative to the first linking piece (213, 223) and the other ring (295) is fixed relative to the second linking piece (233, 243).

4. The joystick according to Claim 3, wherein one of the rings (294 or 295) of the linking member (293) is fixed relative to the frame (201) so as to authorise rotation only of the first linking piece (213, 223) or only of the second linking piece (233, 243) relative to the frame (201) about the fifth axis of rotation (Z).

5. The joystick according to Claim 3, wherein the linking member (293) comprises at least one roller (296) rotatably mounted about an axis of rotation fixed relative to the frame (201), the roller (296) being interposed between the internal ring (295) and the external ring (294) such that rotation of one of the rings relative to the frame (201) concurrently causes rotation in the opposite direction of the other ring relative to the frame (201).

6. The joystick according to Claim 2, wherein one of the rings (295) of the linking member (293) is fixed relative to the third intermediate piece (255, 265) and the other ring (294) is fixed relative to the fourth intermediate piece (275, 285).

7. The joystick according to Claim 6, wherein one of the rings (294 or 295) of the linking member (293) is fixed relative to the lever (202) so as to authorise rotation of the lever (202) only relative to the third intermediate piece (255, 265) or only relative to the fourth intermediate piece (275, 285) about the fifth axis of rotation (Z').

8. The joystick according to Claim 6, wherein the linking member (293) comprises at least a roller (296) rotatably mounted about an axis of rotation fixed relative to the lever (202), the roller (296) being interposed between the internal ring (295) and the external ring (294) such that rotation of one of the rings (294, 295) relative to the lever (202) concurrently causes rotation in the opposite direction of the other ring (294, 295) relative to the lever (202).

9. The joystick according to Claim 1, wherein the mechanical linking assembly (203) comprises a linking member (393) comprising a fixed part (396) and a part (394, 395) mounted mobile relative to the fixed part, the linking member (393) comprising at least two flexible blades (301, 302; 303, 304), each flexible blade (301, 302; 303, 304) connecting the parts (394, 395, 396) together and being elastically deformable to authorise rotation of the mobile part (394, 395) relative to the fixed part (396), the flexible blades (301, 302; 303, 304) being capable of generating compensating torque tending to oppose the rotation of the parts (394, 395, 396) relative to each other.

10. The joystick according to Claim 9, wherein the third intermediate piece (255, 265) or the fourth intermediate piece (275, 285) is fixed to one part (394, 395) of the linking member (393) and the lever (202) is fixed to the other part (396) of the linking member (393).

11. The joystick according to any one of the preceding claims, wherein the lever (102, 202) is connected to the frame (101, 201) by a ball-joint link (150) enabling rotation of the lever (102, 202) according to the three axes of rotation (X, Y, Z; Z') relative to the frame (101, 201).

12. The joystick according to Claim 1, wherein the lever (102, 202) is connected to the frame (101, 201) by a cardan link enabling only rotation of the lever (102, 202) according to the first axis (X) and rotation of the lever (102, 202) according to the second axis (Y) relative to the frame (101, 201).

13. The joystick according to Claim 12, wherein the lever (102, 202) is capable of simply bearing on the third intermediate piece and on the fourth intermediate piece to urge the intermediate pieces in rotation respectively according to the third and fourth axes (Y', X') so as to authorise relative rotation of the intermediate pieces relative to the lever (102, 202) according to the fifth axis of rotation (Z, Z').

14. The joystick according to Claim 13, wherein one of the intermediate pieces comprises a stop arranged such that the lever (202) is capable of bearing on the stop to stress the intermediate piece and cause the rotation of the intermediate piece in a single direction of stress.

15. The joystick according to Claim 14, wherein the lever (202) is capable of bearing on the stop according to a rectilinear line of contact, parallel to the fifth axis of rotation (Z, Z').

16. The joystick according to Claim 14, wherein the lever (202) is capable of bearing on the stop according to a cylindrical contact surface, having an axis of revolution parallel to the fifth axis of rotation (Z, Z').

17. The joystick according to any one of the preceding claims, comprising a return member (156, 166, 176, 186, 256, 266, 276, 286) capable of urging one of the intermediate pieces (155, 165, 175, 185, 255, 265, 275, 285) of the linking member (253, 263, 273, 283) to oppose rotation of the intermediate piece.

18. The joystick according to Claim 17, wherein the return member (156, 166, 176, 186, 256, 266, 276, 286) comprises a traction spring (157, 167, 177, 187, 257, 267, 277, 287) connecting the first linking piece (113, 123, 213, 223) or the second linking piece (133, 143, 233, 243) to the intermediate piece (155, 165, 175, 185, 255, 265, 275, 285) which is driven in rotation under the action of the lever (202).

19. The joystick according to Claim 18, wherein the return member (156, 166, 176, 186, 256, 266, 276, 286) comprises a ribbon (158, 258) connecting the traction spring (157, 167, 177, 187, 257, 267, 277, 287) and the intermediate piece (155, 165, 175, 185, 255, 265, 275, 285), the ribbon being capable of winding about a cylindrical element (259, 269, 279, 289) and connected to the intermediate piece (155, 165, 175, 185, 255, 265, 275, 285).
